# EUROPEAN PATENT SPECIFICATION

(11) **EP 1 277 016 B1**
(45) Date of publication and mention of the grant of the patent: **06.12.2006**
(21) Application number: 00926959.8
(22) Date of filing: 18.04.2000
(51) Int. Cl.: F24D 10/00, F24D 11/00

(54) **CENTRAL HEATING SYSTEM FOR HEAT USERS PROVIDED WITH HEAT STORAGE VESSELS**
ZENTRALHEIZUNGSANLAGE FÜR WÄRMEBENUTZER MIT WÄRMESPEICHER
SYSTEME DE CHAUFFAGE CENTRAL DESTINE AUX UTILISATEURS DE CHAUFFAGE CENTRAL MUNI DE RECIPIENTS DE STOCKAGE DE CHALEUR

(43) Date of publication of application: 22.01.2003
(73) Proprietor: Collet, Peter J., 7311 GZ Apeldoorn (NL)
(72) Inventor: Collet, Peter J., 7311 GZ Apeldoorn (NL)
(86) International application number: PCT/EP2000/003443
(87) International publication number: WO 2001/079761

(56) References cited:
- EP-A- 0 168 084
- DE-A- 3 123 875
- US-A- 5 697 551

## Description

The present invention relates to a heating system for a plurality of seperate heat users, such as houses, apartments, comprising at least one heat source for heating a heat transfer liquid such as water, a circulation system for delivery of hot heat transfer liquid to said users, and each of said users provided with means that include a heat storage vessel containing heat transfer liquid as heat storage medium.

Said circulation system comprises delivery conduits for supplying hot heat transfer liquid to said users and return conduits for returning cooler heat transfer liquid back to the heat source. Delivery and return conduits comprise main conduits and service conduits, said service conduits connecting main conduits to each of said heat users. Said circulation system further comprises flow governing means, including delivery and charging means for delivery of hot heat transfer liquid to said heat users and for charging said heat storage vessels, such governing means further including bypass means for allowing a bypass flow of heat transfer liquid from delivery to return conduits without passing a heat storage vessel.

Such heating systems are known from patent application EPA 0 168 084 and EUROHEAT & POWER - Fernwärme international 3/1998, pages 50 - 52. The advantages claimed for such systems particularly include a higher energy efficiency because of lower heat losses of said service conduits. Hot primary water contained by said heat storage vessel is circulated through a through-flow heat exchanger for heating domestic water on demand and optionally through one or more heat emitters, such as radiators, for providing space heating on demand. Heat losses of service conduits are reduced because such conduits cool down during periods in between consecutive charging of a heat storage vessel, such reduction in heat losses being greater when the time intervals between charging are longer, particularly when the daily heat demand is relatively low and the liquid containment volume of the heat storage vessel is relatively large. In said references mention is made of storage vessels having a volume of 200 liters.

A disadvantage of such known heating systems is that although the heat losses of service conduits are reduced, the heat losses of main delivery and return conduits remain high. The temperature of liquid flowing through main delivery conduits is continuously kept at a high level, so as to deliver on demand of individual users, hot heat transfer liquid having a temperature that is higher than a selected minimum delivery temperature for heat storage. Such selected minimum temperature, for example 75 degrees Celcius, is selected so as to be sufficiently high for heating domestic water to a relatively high temperature, for example 60 degrees Celcius, after the stored heat transfer liquid has undergone a temperature drop because of heat losses during storage.

Because the heat losses of the main delivery conduits cause the temperature of heat transfer liquid flowing through such conduits to decrease, such flow is continuously kept above a minimum level so as to prevent delivery temperatures from dropping below said minimum temperature for heat storage. During periods that little or no heat transfer liquid is required for heating purposes, the flow through main delivery conduits is continuously maintained above said minimum level by conducting heat transfer liquid through bypass conduits connecting main delivery conduits to main return conduits, such bypass conduits comprising thermostatic valve means. Because hot heat transfer liquid that is bypassed is not cooled by heat utilization, such bypass flow causes high temperatures of liquid flowing through main return conduits, thereby increasing the heat losses of main return conduits.

High temperatures of heat transfer liquid returning to the heat source through main return conduits may further reduce energy efficiency because of a lower efficiency of heat production, particularly when the heat source includes means of heat production having an energy conversion efficiency and/or heat recovery effectiveness that is reduced when said return temperature is increased, for example heat pumps, condensing heat recovery heat exchangers, Rankine cycle cogeneration installations, intercooled gasturbine cogeneration installations, solar heat panels, and the like. Such means of heat production have great energy savings potential because of a high ratio between useful heat production and prime energy (fuel) consumption. Such energy savings are also of great benefit in reducing emissions of fuel combustion.

Because of the reduction in energy efficiency caused by high temperatures in main delivery and return conduits, it is generally mandatory for such conduits to have a high degree of heat insulation so as to avoid energy savings from becoming very low or even negative, particularly when the daily heat demand is low and/or the users are located in an area with low building density. Such high degree of insulation has the disadvantage of increasing investment and (indirectly) maintenance costs. The causes of such cost increases include a higher price per meter of conduit and higher costs of installation because a larger outer (jacket) diameter causes the flexibility and therefore the ease of handling during installation to be reduced.

Other disadvantages of such heating systems relate to the size of the heat storage vessel, a larger vessel causing higher heat losses and increased costs, and limiting the applicability of such systems when said heat users have limited space for installing such vessels in an otherwise advantageous location.

An object of the invention is to improve the energy efficiency of such heating systems by greatly reducing heat losses of main delivery and return conduits and by decreasing return temperatures to the heat source, particularly during periods of the year when there is little or no demand for space heating. Another object of the invention is to decrease investment and maintenance costs by reducing the heat insulation of main delivery and return conduits without reducing energy savings to undesirably low levels. Another object of the invention is to greatly reduce the size of heat storage vessels so as to avoid or reduce said disadvantages of large heat storage vessels.

Accordingly the proposed heating system is characterized by having little or no continuous bypass flow downstream of main delivery conduits during times that no heat transfer liquid is delivered to any heat user connected downstream of such main delivery conduits. During such times, the temperature of liquid contained by such main delivery conduit decreases, causing the heat losses of such conduit to decrease. According to the invention the duration of such cooling down times (cooling time spans), and therefore the reduction in heat losses, is increased by concurrently charging the heat storage vessels of a plurality of said connected users, so as to have such charged heat storage vessels approximately fully charged at approximately the same time, thereby causing the time span before depletion of any heat storage vessel of said connected users to be on average longer than when heat storage vessels are charged on individual demand.

During times in between concurrent charging operations, any of said users may have a demand for domestic hot water that causes depletion of hot heat transfer liquid contained by its heat storage vessel, particularly when such demand is for a hot shower or bath, and when the liquid containment volume of the storage vessel is relatively small. When the temperature of liquid, contained by (a) main delivery conduit(s) upstream of such user, has dropped below a selected minimum temperature for delivery of hot heat transfer liquid to said user, then the volume of heat transfer liquid that must be bypassed before delivery of liquid having a sufficiently high temperature can take place, may be very large. During the time span of such bypass operation, referred to in the following as the bypass time span, the heat transfer liquid for heating domestic water is drwn from the storage vessel. The (rest) volume of hot liquid contained by said storage vessel at the beginning of the bypass flow is selected so as to be sufficient for heating a maximum flow of domestic hot water during said bypass time span, so as to ensure an uninterrupted supply of domestic hot water during the period of such demand. A problem of such mode of operation is that when the volume of liquid that must be bypassed is large, said bypass time span, and therefore said rest volume, may also be large, causing size requirements and heat losses of heat storage vessels to increase.

According to the invention such disadvantages are minimized by including governing means that are controlled such as to maintain a high temperature of heat transfer liquid inside main delivery conduits upstream of said cooled down main delivery conduits, thereby reducing bypass time span by reducing the volume of heaat transfer liquid that must be bypassed. Such main delivery and corresponding return conduits are indicated in the following by adding the term "supply".

Further according to the invention bypass means are provided for reducing bypass time span by greatly increasing the bypass flow through said cooled down main delivery conduits. Providing such high flow bypass capability includes maximizing flow through bypass valves of individual heat users and may include bypass valves connecting main delivery and return conduits and/or may include central control means for concurrently opening individual bypass valves of a plurality of heat users.

These and other features and advantages of the present invention are described, with reference to the accompanying drawings, for an example of an embodiment of a heating system according to the invention.
Fig.1 is a schematic representation of a heating system comprising a heat source and a circulation system for supplying hot primary water to a plurality of heat users.
Fig 2 is a schematic representation of apparatus for receiving and utilizing hot primary water by a heat user.

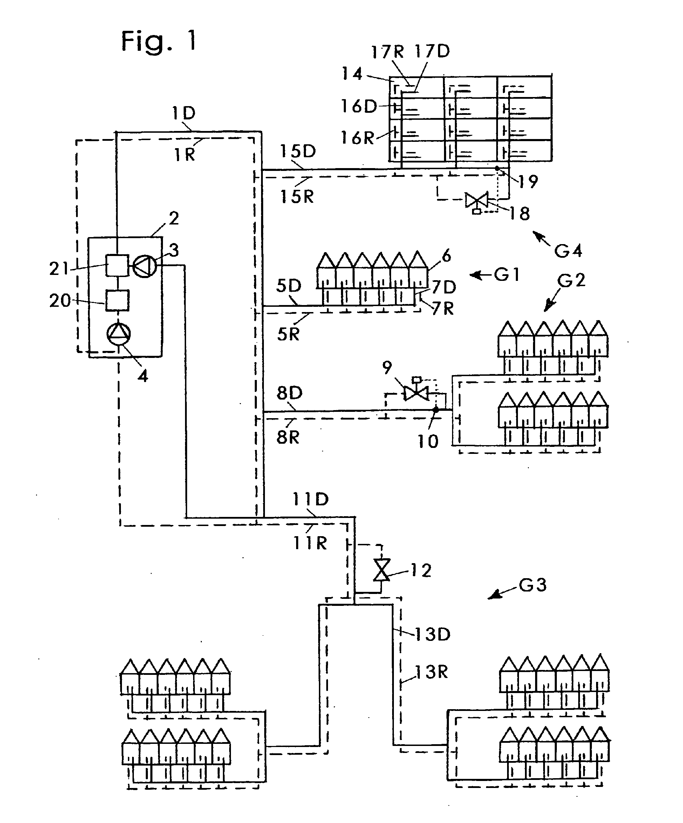

Fig.1 schematically shows a circulation system having delivery conduits that are represented by full lines and indicated by numerals having an affix D, and return conduits that are indicated by broken lines and like numerals having an affix R. Said circulation system comprises a main supply ring delivery conduit 1D and a main supply ring return conduit 1R connecting a heat source 2 to (examples of) groups of heat users G1, G2, G3 ,G4, each group comprising at least one main branch conduit that is connected by service conduits to each of said users. Such users are provided with apparatus, not shown in Fig. 1, for receiving and utilizing hot heat transfer liquid. Circulation pump 4 provides circulation of heat transfer liquid through delivery and return conduits.

Main supply ring delivery conduit 1D has at least two connections with heat source 2 . During periods that little or no heat transfer liquid is delivered to said users, circulation pump 3 is governed such as to provide circulation of hot heat transfer liquid through said main supply ring delivery conduit 1D and heat source 2, said heat source heating such circulated liquid so as to compensate for heat losses of main supply ring delivery conduit 1D, thereby continuously providing at each connection to a main branch delivery conduit, hot heat transfer liquid having a temperature within a small band of for example 3 degrees. Heating systems that include such main supply ring conduits are known to also have the advantage of increasing the reliability of the heating system by maintaining the delivery of hot heat transfer liquid to most or all heat users when a section of the main ring conduit is closed for maintenance or repairs.

Delivery of hot heat transfer liquid for concurrently charging heat storage vessels of a plurality of users is preferably timed so as to have storage vessels contain sufficient hot heat transfer liquid for meeting low volume demands during periods in between consecutive concurrent charging operations. Such low volume demands are for example for heating domestic water for washing hands or washing dishes, or for providing space heating for keeping room temperatures at an approximately constant level. On days without space heating demand, and when heat storage vessels have a relatively small liquid containment volume of for example 40 liters, such timing may for example comprise 4 concurrent charging operations per day. On days with space heating demand, the number of such charging operations may be increased up to more than 20 per day. The liquid containment volume of heat storage vessels may advantageously be increased up to for example 80 liters, for users having a greater total of low volume domestic water demands, and/or a greater space heating demand, and/or having service conduits of greater length.

Concurrent charging of storage vessels may be sequenced for adjacent users, so as to reduce flow losses in main delivery conduits during such charging operations. The timing of such operations is preferably controlled by one or more central electronic system controllers, not shown in Fig.1, connected by wireless and/or conduit-bound transmission means with users of a group or with all users of the heating system. Such communication means may advantageously be utilized for also centrally recording the energy usage of heat users.

When users have a high volume demand for hot heat transfer liquid, for example for heating domestic water for a hot shower or bath, or for providing space heating during a warm up period after a night with decreased room thermostat setting, it becomes very likely that the heat storage vessel, particularly a small vessel, becomes depleted during such demand. Additional hot heat transfer liquid for meeting such demand and for individually recharging said heat storage vessel is then delivered in between two consecutive concurrent charging operations, thereby increasing the frequency and reducing the average duration of cooling time spans, thereby increasing the heat losses of such conduits. However, because such high volume demands occur predominately during limited periods of the day, particularly during early morning and late evenings, the average cooling time spans during other periods of the day are little reduced, therefore the daily heat loss reduction remains high.

When such a high volume demand is for heating domestic water, it is mandatory for comfort reasons to provide an uninterrupted flow of domestic hot water during the period of such demand, particularly when such demand is for providing a hot shower. Means are provided for adapting the bypass flow so as to deliver hot heat transfer liquid for heating domestic water before the heat storage vessel of such user is fully depleted of hot heat transfer liquid. Such means are described in the following for examples of user groups shown in Fig 1.

User group G1 is representative of a small number of heat users, for example houses such as 6 in a row of six houses, located close to main supply ring conduits 1D, 1R. Hot heat transfer liquid flowing though main supply ring delivery conduit 1D is supplied to such users through main branch delivery conduit 5D and service delivery conduits such as 7D. When the temperature of liquid contained by main branch delivery conduit 5D drops below a set minimum temperature for delivery to users, for example below 70 degrees Celcius, the volume of liquid that must be bypassed, so as to deliver heat transfer liquid having at least said temperature, to a user located farthest from said main supply ring delivery conduit 1D, may for example be 15 liters. Such user is provided with an individual bypass valve 26, not shown in Fig 1, which because of a limited maximum flow through service delivery conduit 8D may have a maximum flow capability of only 10 liters per minute. The bypass time span is then one and half minutes. The rest volume of the heat storage vessel is set so as to provide hot liquid for heating a maximum flow of domestic hot water during such time span, for example 9 liters.

User groups G2, G3 and G4 comprise larger numbers of users located farther from main ring conduits 1D, 1R. The volume of water contained by main delivery conduits connecting users to main supply ring delivery conduit 1D, and therefore the volume of heat transfer liquid that is to be bypassed within said set bypass time span of one and half minutes, may be very much larger.

For users of group G2, comprising two rows of six houses such as 7, such bypass volume may for example be 50 liters. Bypass means that connect main delivery conduit 8D with main return conduit 8R, are provided at the downstream end of delivery conduit 8D, so as to greatly increase the bypass flow capability in comparison with the maximum flow through the bypass valve of an individual user, so as to keep the bypass time span below one and a half minutes. Said bypass means include bypass valve 9 and temperature sensor 10. Bypass valve 9 is governed to open when one of the users of G2 signals a demand for delivery of hot heat transfer liquid and when temperature sensor 10 senses heat transfer liquid contained by main delivery conduit 8D to be below a set minimum temperature for delivery of hot heat transfer liquid to users. The signal for such user demand may be transmitted through aforementioned communication means between central system controller and said user, or alternatively by pressure sensing means, not shown in Fig. 1, signaling a sudden pressure change in main branch delivery conduit 8D. Bypass valve 9 is governed to close when temperature sensor 10 senses a temperature that is above said set minimum temperature.

User group G3 is representative of a still larger number of heat users that may be located even farther from main supply ring conduits 1D, 1R. Because a temperature drop of all the liquid contained by delivery conduit 11D may cause the required bypass volume to be very high, for example more than 100 liters, bypass valve 12 is controlled such as to continuously bypass heat transfer liquid from main supply branch delivery conduit 11D to corresponding return conduit 11R, so as to maintain high liquid temperatures in main supply branch delivery conduit 11D, so as to reduce the volume of heat transfer liquid to be bypassed within said set time span of one and half minutes. Said bypass means 12 may be very simple and therefore cheap, comprising for example a fixed orifice.

Means for greatly increasing the bypass flow in comparison with the maximum flow through an individual bypass valve may, as an alternative to bypass means 9,10 shown for G2, comprise aforementioned central system controller governing individual bypass valves of a plurality of users downstream of main delivery conduit 13D, so as to open when one of such users signals a demand for delivery of hot heat transfer liquid, and when the cooling time span since a preceding delivery to any of said users exceeds a set limit. Such limit is set so as to correspond with the time that it takes for the temperature of liquid contained by main branch delivery conduit 13D to drop below said selected minimum delivery temperature. Such alternative means for greatly increasing the bypass flow provide the advantage of avoiding the need for bypass valve means 9, 10, which may, particularly when such means would need to be located outside of a building, significantly reduce investment and maintenance costs.

User group G4 is representative of multistorey buildings comprising apartments such as 14. Hot heat transfer liquid flowing through main supply ring delivery conduit 1D is supplied to such users through main branch delivery conduit 15D, connected downstream to a plurality of main branch delivery conduits such as 16D, each of which are connected by service delivery conduits such as 17D to heating apparatus inside each of said apartments. Valve means that are provided for greatly increasing the bypass flow in comparison with the maximum flow through an individual bypass valve, connect main delivery conduit 15D with main return conduit 15R at the downstream end of delivery conduit 15D. Said means include bypass valve 18 and temperature sensor 19 that operate in the manner as described in the foregoing for bypass means 9,10.

Delivery and return conduits of a heating system according to the invention may advantageously be adapted so as to provide high energy efficiency and low investment and maintenance costs.

Service conduits such as 7D,7R , and main branch conduits such as 5D,5R and 8D,8R and 13D,13R, preferably comprise insulated liquid carrying (carrier) pipes that have little or no problems with frequent and large temperature changes, for example flexible conduits comprising plastic carrier pipes.

A major cost reduction may be provided by reducing the heat insulation and thereby the outer diameter of such conduits. Because the time-averaged temperature of water contained by such conduits is low, such adaptation causes little increase in heat losses. A first cost reduction is provided by the reduced weight and increased flexibility of such conduits. A second cost reduction, and a much improved reliability, may be provided by prefabricating the connections between such a main conduit and a plurality of service conduits, and adapting such connections so as to transport such prefabricated combination of conduits as a roll, particularly by connecting such a main conduit and service conduits in parallel. Prefabricated connections are particularly advantageous when said conduits comprise wiring for electronic communication between users and aforementioned central system controller(s).

Said circulation system may advantageously comprise return conduits with carrier pipes having inner diameters that are larger than inner diameters of carrier pipes of delivery conduits having like numerals, for example between one and a half and twice times as large, and to have less heat insulation, thereby reducing the costs of such conduits. Because the time-averaged temperature of heat transfer liquid contained by return conduits is very low, such decreased insulation causes only a small increase in heat losses. Other advantages provided by such increase in inner diameter of return conduits are related to greatly decreased flow pressure losses in return conduits.

Heat source 2 includes heat production means 20 for heating heat transfer liquid returning to the heat source at a low temperature, for example 25 degrees Celcius. Such heat production means preferably have an energy efficiency and/or effectiveness that yields greater energy savings when the (averaged) heat production temperature is decreased, for example a plurality of electric heat pumps that are placed in series for stepwise heating of heat transfer liquid, such heat pumps subtracting heat from a low temperature heat source, not shown in Fig.1, such as ground water, surface water, waste effluent and/or the like. Other examples for heat production means 20 include condenser means of Rankine cycle cogeneration installations, solar heat panels having a heat recovery effectiveness that increases as the temperature of the heat transfer liquid is reduced , and the like.

Preferably heat source 2 also includes production means 21 for further heating heat transfer liquid to the temperature of the heat transfer liquid exiting heat source 2 and flowing through main ring delivery conduit 1D. Such means may advantageously comprise heat production processes for which the energy efficiency hardly decreases when such exit temperature is raised, for example gasmotor cogeneration installations, fuel fired boilers, and the like.

Heat source 2 may alternatively comprise heat production means that combine said effects of first and second heat production in a single installation, for example a cogeneration installation or a fuel fired boiler comprising an integrated condensing heat exchanger for heat recovery from exhaust gases, or a cogeneration installation comprising an intercooled gasturbine.

Not shown in Fig 1 are auxiliary apparatus, well known to persons skilled in the art, such as heat storage reservoirs, pumps, valves, and the like.

Alternative embodiments of heating systems according to the invention may comprise a heat source supplying a smaller number of building units, for example a heat source for supplying apartments 14 of a multistorey apartment block, and having such heat source located inside the apartment block. Alternatively the embodiment shown in Fig 1 may form part of a larger heating system, heat source 2 being for example connected by delivery and return conduits to a remotely located heat source, for example waste heat recovery means of an industrial plant or a central electricity generating station.

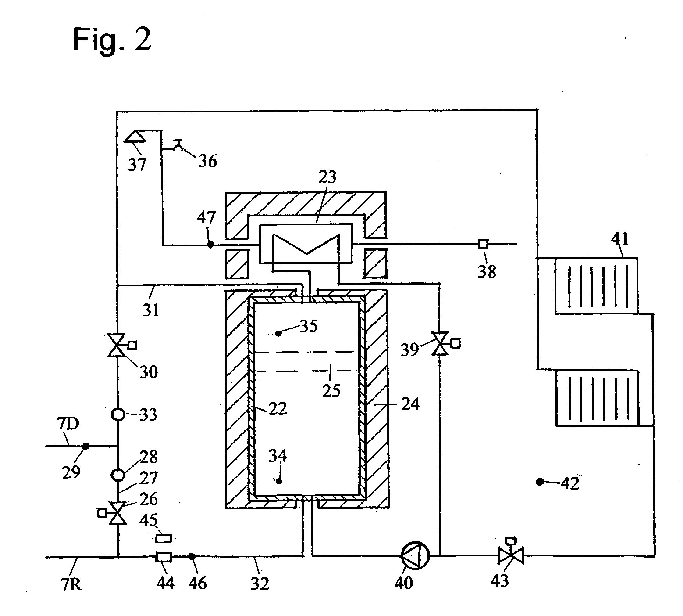

Fig. 2 schematically shows apparatus for receiving and utilizing hot heat transfer liquid by a heat user, including a heat storage vessel 22 and a through flow heat exchanger 23 for heating domestic water, that are preferably contained within a common shell of heat insulating material 24 , so as to keep the temperature of domestic water heater 23 high during periods in between withdrawals of domestic hot water , thereby providing the advantages of instant availability of domestic hot water and reduced standstill heat losses of said heater in between withdrawals of domestic hot water.

Heat storage vessel 22 contains heat transfer liquid preferably having a stratified temperature distribution, whereby an upper zone of hot liquid is separated from a lower zone of cooler liquid by a layer of liquid 25 having a steep vertical temperature gradient, such separating layer moving downward when the heat storage vessel is charged, and moving upward when hot heat transfer liquid is withdrawn for heating domestic water and/or for providing space heating.

Upon receiving a signal from aforementioned control means for beginning of a concurrent charging operation, bypass control valve 26 is activated so as to open and cause a flow of heat transfer liquid through bypass conduit 27, such flow preferably being as high as is allowable for reasons that limit the maximum flow through service delivery conduit 7D, such reasons being for example flow pressure losses or so as to avoid high noise levels. Flow limiter 28 in bypass conduit 27 is optionally included so as to provide such flow limitation. When temperature sensor 29 signals the temperature of the bypassed liquid to be higher than a set temperature, bypass control valve 26 is activated so as to close and control valve 30 is activated so as to open, causing hot heat transfer liquid to flow through service delivery conduit 7D and through conduit 31 into heat storage vessel 22, and causing cooler heat transfer liquid to flow out of said storage vessel through conduit 32 and through service return conduit 7R, thereby causing the heat storage vessel to be charged. The flow rate during charging is preferably kept within a relatively narrow band by flow limiter 33, and by operating circulation pump 4 at heat source 2 so as to keep the pressure difference over said flow limiter above a set level during such charging operation. The charging operation is terminated by control means, including temperature sensor 34 in the lower part of storage vessel 22, activating valve 30 so as to close.

A signal for individual charging of a heat storage vessel operation is given by temperature sensor 35 sensing an upward movement of separating layer 25, thereby indicating the hot heat transfer liquid contained by storage vessel 22 to have decreased below a set minimum volume. Such set volume is selected so as to provide hot heat transfer liquid water for heating a high(est) flow of domestic water during aforementioned bypass time span of one and a half minutes, so as to avoid an undesirable drop in temperature of domestic hot water exiting from domestic water heater 23 during a period of domestic hot water withdrawal, particularly when such withdrawal is for a hot shower.

Upon the beginning of a withdrawal of domestic hot water from an outlet such as tap 36 or douche head 37, flow sensor means 38 in the secondary circuit of domestic water heater 23 , preferably a compact counter flow heat exchanger, activates control valve 39 and circulation pump 40 so as to circulate hot heat transfer liquid from the upper part of storage vessel 22 through the primary side of domestic water heater 23. Control valve 39 is thermostatically controlled by temperature sensor 47 so as to keep the temperature of heated domestic water approximately constant within a narrow temperature band. Domestic water heating may alternatively be controlled by means that are known to persons skilled in the art.

Space heating is provided by a direct system comprising at least one radiator heat emitter such as 41 through which heat transfer liquid is circulated. Alternatively an indirect system may be provided including a heat exchanger for transfer of heat from heat transfer liquid to secondary water circulating through said radiator(s). Space heating may alternatively be provided by other known systems, for example an air circulation system or a floor heating system.

Control means for providing space heating may for example include a central room thermostat 42 activating control valve 43 and circulation pump 40 so as to circulate hot heat transfer liquid through at least one radiator 41. Such control means may also or alternatively include thermostatic valves, not shown in Fig. 2, for the or each radiator. Circulated heat transfer liquid for space heating is generally withdrawn from the upper part of heat storage vessel 22 and cooler heat transfer liquid is returned to the lower part of said vessel. When a space heating demand occurs during charging of said heat storage vessel, circulation of heat transfer liquid through space heating emitters may be parallel to circulation of heat transfer liquid for charging of heat storage vessel 22, or priority controls may be provided for closing control valve 43. Priority control means may also be provided for closing said control valve during a withdrawal of domestic hot water.

By adapting flow limiter 33 and pressure levels in the circulation system so as to keep the flow rate during delivery of heat transfer liquid to a user within a relatively narrow band, the heat meter of a user may advantageously comprise a simple cheap water meter 44 registering the accumulated volume of heat transfer liquid delivered to a user, and an electronic meter 45 registering during delivery periods the time integrated temperature difference sensed by temperature sensors 29 and 46. Such heat meter, providing high measuring accuracy, may be much cheaper than known heat meters comprising a flow meter for registering the time integrated product of flow and temperature.

Preferably users comprise an individual electronic controller unit, not shown in Fig. 2, that is in communication with some or all of the aforementioned sensors end control means, and that is in communication with aforementioned central system controller(s).

## Claims

1. Method for delivering heat to a plurality of heat users (6), using a heating system comprising at least one heat source (2) for heating a heat transfer liquid, a circulation system for delivery of heat transfer liquid to each of such users having a heat storage vessel (22) containing heat transfer liquid as heat storage medium, the circulation system comprising delivery and return conduits that include main supply conduits (11D, 11R), main branch conduits (8D, 8R) and service conduits (7D, 7R), the circulation system further comprising flow governing means including delivery and charging means (30) for delivery of hot heat transfer liquid and for charging of heat storage vessels and further including bypass means (26) for allowing a bypass flow of heat transfer liquid from delivery to return conduits without passing a heat storage vessel, **characterized by** controlling said bypass means such that there is little or no continuous bypass flow downstream of such said main branch delivery conduits (8D) during times that no heat transfer liquid is delivered to any heat user connected downstream of such said main branch delivery conduits.

2. Method according to claim 1, whereby said flow governing means include means for controlling the temperature of heat transfer liquid inside such said main supply delivery conduit (11D), **characterized by** controlling said governing means such as to maintain the temperature of heat transfer liquid inside said main supply delivery conduits above a selected temperature.

3. Method according to claim 2, whereby said main supply delivery conduits include at least one main supply ring delivery conduit (1D) and said governing means include pumping means (3) for circulating heat transfer liquid through said main supply ring delivery conduit, **characterized by** controlling said pumping means such as to maintain the temperature of heat transfer liquid inside said main supply ring delivery conduit above a selected temperature and within a selected temperature band.

4. Method according to claim 2 or 3, whereby said main supply delivery conduits comprise at least one main supply branch delivery conduit (11D) and said flow governing means include a main bypass valve (12) connecting said conduit with corresponding main branch return conduit (11R), **characterized by** controlling the flow through said bypass valve such as to maintain the temperature of heat transfer liquid inside said main supply branch delivery conduit above a selected temperature.

5. Method according to any of the preceding claims, **characterized by** controlling said governing means such as to include charging operations that include concurrent charging of heat storage vessels of a plurality of heat users connected downstream of such said main branch delivery conduits (5D).

6. Method according to any of the preceding claims, whereby said delivery and charging means include means (35) for signaling a demand for delivery of hot heat transfer liquid to each heat user, **characterized by**, after a demand by such said heat user for delivery of hot heat transfer liquid, bypassing heat transfer liquid having a temperature lower than a selected minimum temperature for delivery to such heat user, until the temperature of the heat transfer liquid is equal or higher than said minimum temperature.

7. Method according to any of the preceding claims, **characterized by** maximizing the bypass flow, during bypassing the heat transfer liquid having a temperature lower than said selected minimum temperature, in order to minimize bypass time span.

8. Method according to claim 7, **characterized by** increasing said bypass flow by opening a number of individual bypass valves (26) each connecting a service delivery conduit (7D) with a corresponding service return conduit (7R), of a plurality of users connected downstream of a main branch delivery conduit (5D), whe one of such users signals a demand for delivery of heat transfer liquid.

9. Method according to claim 7 or 8, **characterized by** increasing said bypass flow by opening a main bypass valve (9) connecting a main branch delivery conduit (8D) with a corresponding main branch return conduit (8R).

10. A heating system for delivering heat to a plurality of heat users (6), comprising at least one heat source (2) for heating a heat transfer liquid, a circulation system for delivery of heat transfer liquid to each of such users having a heat storage vessel (22) containing heat transfer liquid as heat storage medium, the circulation system comprising delivery and return conduits that include main supply conduits (11D, 11R), main branch conduits (8D, 8R) and service conduits (7D, 7R), the circulation system further comprising flow governing means including delivery and charging means (30) for delivery of hot heat transfer liquid and for charging heat storage vessels, such delivery and charging means including means (33) for signalling a demand for charging heat storage vessel, such flow governing means further including bypass means (26) for allowing a bypass flow of heat transfer liquid from delivery to return conduits without passing a heat storage vessel, **characterized by** said flow governing means being adapted to cause a flow such that within a selected time span after a signal for charging a heat storage vessel of a heat user, heat transfer liquid having a temperature higher than a selected temperature is delivered to such heat user.

11. A heating system according to claim 10, **characterized by** said flow governing means including at least one central electronic system controller in communication with a plurality of heat users.

12. A heating system according to claims 10 or 11, **characterized by** said bypass means comprising individual bypass valves (26) connecting service delivery conduit (7D) with corresponding service return conduit (7R) and said flow governing means being adapted to control individual bypass valves of a plurality of users downstream of a main branch delivery conduit.

13. A heating system according to one or more of claims 10 - 12, **characterized by** said bypass means comprising at least one main bypass valve (9) connecting a main delivery conduit (8D) with a corresponding main return conduit (8R), said flow governing means being adapted to control the main bypass valve.

14. A heating system according to one or more of claims 10 - 13, **characterized by** said flow governing means including a temperature sensor (10) for sensing the temperature of the heat transfer liquid in a main delivery conduit (8D) and said flow governing means being adapted to control a bypass valve (9) to open when one of the users downstream of said main delivery conduit signals a demand for hot heat transfer liquid and the temperature of water contained by said conduit is sensed to be lower than a selected temperature, and for such bypass valve to close when such temperature is sensed to be higher than a selected temperature.

15. A heating system according to one or more of claims 10 - 14, **characterized by** said circulation system comprising main supply ring delivery conduit (1D).

16. A heating system according to or more of claims 10 - 15, **characterized by** return conduits comprising carrier pipes having a larger inner diameter and less heat insulation than corresponding delivery conduits.

17. A heating system according to one or more of claims 10-16, **characterized by** main conduits and service conduits having prefabricated connections.

18. A heating system according to claim 17, **characterized by** said prefabricated connections comprising main conduits and service conduits connected in parallel.

19. A heating system according to one or more of the preceding claims, **characterized by** said heat storage vessel (22) containing heat transfer liquid having a stratified temperature distribution.

20. A heating system according to one or more of the preceding claims, **characterized by** said users comprising a through flow domestic water heater (23).

21. A heating system according to claim 19 and 20, **characterized by** said heat storage vessel (22) and said through flow domestic water heater (23) having a common encasing of heat insulating material (24).

22. A heating system according to one or more of the preceding claims, **characterized by** said stratified heat storage vessel (22) having a water containment volume between 40 and 80 liters.

23. A heating system according to one or more of the preceding claims, **characterized by** said heat users comprising means for keeping the flow during delivery of hot heat transfer liquid to such a user within a set band, and comprising a heat meter that includes an accumulative water meter (44) and means (45) for registering the time integrated difference between delivery and return temperature, sensed by temperature sensors (29) (46), over the time of delivery.

24. A heating system according to any of the preceding claims, **characterized by** said heat source (2) comprising at least one form of heat production means that is selected from the group that includes heat pumps, solar heat panels, (intercooled) gasturbine cogeneration installations, gasmotor cogeneration installations or fuel fired boilers.

## Patentansprüche

1. Verfahren zur lieferung von Wärme an eine Mehrzahl von Wärmebenützer, mit Gebrauchmachung von einer Heizungsanlage umfassend zum mindestens eine Wärmequelle (2) für Erwärmung von einer Wärmeübertragungsflüssigeitkeit, ein Zirkulationssystem für Lieferung von Wärmeübertragungsflüssigkeit an jeder der solcher Benützer der ein Wärmespeicher (22) mit Wärmeübertragungsflüssigkeit als Wärmespeichermedium enthaltet, das Zirkulationssystem weiter umfassend Vorlauf- und RücklaufLeitungen die Hauptlieferungsleitungen (11D, 11R), Hauptabzweigleitungen (8D, 8R) und Hausanschlussleitungen (7D, 7R) enthalten, das Zirkulationssystem weiter umfassend Durchflussreglungsmittel die Lieferungs- und Aufladungsmittel enthalten für Lieferung von heiszes Wärmeübertragungsflüssigkeit und für Aufladung von Wärmespeichern, und weiter umfassend Bypassmittel (26) für das ermöglichen von einem Bypassdurchfluss von Wärmeübertragungsflüssigkeit ab Vorlauf- zu Rücklaufleitungen ohne Passierung von einem Wärmespeicher, **dadurch gekennzeichnet dass** genannte Bypassmittel derartig angepasst sind dass es wenig oder kein kontinuierlicher Bypassdurchfluss gibt flussabwärts von solche genannte Hauptabzweigvorlaufleitungen (8D) während Perioden das keine Wärmeübertragungsflüssigkeit geliefert wird an irgend einen Wärmebenutzer der flussabwärts angeschlossen ist an solche Hauptabzweigvorlaufleitungen.

2. Verfahren nach Anspruch 1, wobei genannte Durchfluszreglungsmittel Mittel enthalt für Reglung der Temperatur von Wärmeübertragungsflüssigkeit innerhalb solche genannte Hauptlieferungsvorlaufleitungen (11D), **dadurch gekennzeichnet** dasz genannte Reglungsmittel derart geregelt werden dasz die Temperatur der Wärmeübertragungsflüssigkeit innerhalb genannte Hauptlieferungsvorlaufleitungen oberhalb eine bestimmte Temperatur gehalten wird.

3. Verfahren nach Anspruch 2, wobei genannte Hauptlieferungsvorlaufleitungen mindestens eine Hauptlieferungskreisvorlaufleitung (1D) enthalten und genannte Reglungsmittel Pumpmittel (3) enthalten für das Rundpumpen von Wärmeübertragungsflüssigkeit durch genannte Hauptlieferungskreisvorlaufleitung, **dadurch gekennzeichnet** dasz genannte Pumpmittel derartig geregelt werden das die Temperatur der Wärmeübertragungsflüssigkeit innerhalb genannte Hauptlieferungskreisvorlaufleitung oberhalb eine bestimmte Temperatur und innerhalb ein bestimmte Temperaturbereich gehalten wird.

4. Verfahren nach Anspruch 2 oder 3, wobei genannte Hauptlieferungsvorlaufleitungen mindestens eine Hauptlieferungsabzweigvorlaufleitung (11D) enthalten und genannte Durchflussreglungsmittel ein Hauptbypassventil (12) enthalten der genannte Leiting mit korrespondierende Hauptlieferungsabzweigrücklaufleitung (11R) verbindet, **dadurch gekennzeichnet** dasz der Durchfluss durch genanntes Bypaszventil derartig geregelt wird das die Temperatur der Wärmeübertragungsflüssigkeit innerhalb genannte Hauptlieferungsabzweigvorlaufleitung oberhalb eine bestimmte Temperatur gehalten wird.

5. Verfahren nach einem der vorangehenden Ansprüche, **dadurch gekennzeichnet** dasz genannte Reglungsmittel derartig geregelt werden dasz der Aufladungsbetrieb gleichzeitige Auflading enthaltet von Wärmespeichern einer Mehrzahl von Wärmebenützer die flussabwarts von solche genannte Hauptabzweigvorlaufleitingen angeschlossen sind.

6. Verfahren nach einem der vorangehenden Ansprüche, wobei genannte Lieferungs- und Aufladungsmittel Mittel (35) enthalten zur Meldung von eine Frage für Lieferung von heiszer Wärmeübertragungsflüssigkeit zu jeden Wärmebenutzer, **dadurch gekennzeichnet** dasz, nach eine Frage von solch einen Wärmebenutzer für Lieferung von heiszer Wärmeübertragungs-flüssigkeit, Bypassung von Wärmeübertragungsflüssigkeit mit einer Temperatur unterhalb eine bestimmte Minimaltemperatur für Lieferung von solche Wärmeübertragungsflüssigkeit, bis die Temperatur der Wärmeübertragungsflüssigkeit gleich oder höher ist als genannte Temperatur.

7. Verfahren nach einem der vorangehenden Ansprüche, **gekennzeichnet durch** Maximierung des Bypaszflusses, während Bypassung von Wärmeübertragungsflüssigkeit mit einer Temperatur die niedriger ist als genannte Minimaltemperatur, mit das Ziel die Bypasszeitspanne zu minimieren..

8. Verfahren nach Anspruch 7, **dadurch gekennzeichnet** dasz der Bypassflusz erhöht wird durch öffnen von einer Anzahl individueller Bypassventile(26) die jeder eine Hausanschluszvorlaufleitung (7D) verbindet mit einer korrespondierender Hausanschluszrücklaufleitung (7R), von einer Mehrzahl von Benützer flussabwärts von einer Hauptabzweigvorlaufleiting (5D), wenn einer der solche Benützer eine Frage für Lieferung von Wärmeübertragungsflüssigkeit meldet.

9. Verfahren nach Anspruch 7 oder 8, **gekennzeichnet durch** Erhöhung von genannter Bypassflusz **durch** öffnen eines Hauptbypassventil (9) das eine Hauptabzweigvorlaufleiting (8D) mit einer Hauptabzweigrücklaufleiting (8R) verbindet.

10. Eine Heizungsanlage für Lieferung von Wärme an eine Mehrzahl von Wärmebenützer (6), enthaltend zum mindestens eine Wärmequelle (2) für Erwärmung von einer Wärmeübertragungsflüssigkeit, ein Zirkulationssystem für Lieferung von Wärmeübertragungsflüssigkeit an jeder der solcher Benützer der ein Wärmespeicher (22) hat dasz Wärmeübertragungsflüssigkeit als Wärmespeichermedium enthaltet, das Zirkulationssystem weiter umfassend Vorlauf- und Rücklaufleitungen die Hauptlieferungsleitungen (11D, 11R), Hauptabzweigleitungen (8D, 8R) und Hausanschluszleitungen (7D, 7R) enthalten, das Zirkulationssystem weiter umfassend Durchflussreglungsmittel die Lieferungs- und Aufladungsmittel (30) enthalten für die Lieferung von heiszes Wärmeübertragungsflüssigkeit und für Aufladung von Wärmespeichern, solche Lieferungs- und Aufladungsmittel umfassend Mittel (33) zür signalierung einer Frage für Aufladung von Wärmespeicher, solche Durchflussreglungsmittel weiter umfassend Bypassmittel (26) für das ermöglichen von einem Bypassdurchfluss von Wärmeübertragungsflüssigkeit ab Vorlauf- zu Rücklaufleitungen ohne Passierung von einem Wärmespeicher, **dadurch gekennzeichnet** dasz genannte Bypassmittel adaptiert sind um einer solcher Durchfluss zu verursachen dasz innerhalb eine bestimmte Zeitspanne nach eine Frage zur Aufladung von einem Wärmespeicher, Wärmeübertragungsflüssigkeit mit einer Temperatur höher als einer bestimmte Temperatur geliefert wird an solcher Wärmebenutzer.

11. Eine Heizungsanlage nach Anspruch 10, **dadurch gekennzeichnet** dasz genannte Durchfluszreglungsmittel zum mindestens ein centrale elektronische Systemregler enthalten der in verbindung ist mit einer Mehrzahl von Wärmebenützer.

12. Eine Heizungsanlage nach Anspruch 10 oder 11, **dadurch gekennzeichnet** dasz genannter Bypassmittel einzelne Bypassventile (26) enthalten die Hausanschluszvorlaufleitung (7D) mit korrespondierender Hausanschluszrücklaufleitung (7R) verbindet und genannte Durchfluszreglungsmittel adaptiert sind um einzelne Bypassventile von einer Mehrzahl von Benützer flussabwärts von einer Hauptabzweigvorlaufleitung zu regeln.

13. Eine Heizungsanlage nach einer oder mehrere Ansprüche 10 - 12, **dadurch gekennzeichnet** dasz genannte Bypassmittel zum mindestens ein Hauptbypassventil (9) enthalten der eine Hauptvorlaufleitung (8D) verbindet mit einer korrespondierender Hauptrücklaufleitung (8R), wobei genannte Durchfluszreglungsmittel adaptiert sind um der Hauptbypassventil zu regeln.

14. Eine Heizungsanlage nach einer oder mehrere Ansprüche 10 - 13, **dadurch gekennzeichnet** dasz genannte Durchflussreglungsmittel ein Temperaturfühler (10) enthalten die die Temperatur von Wärmeübertragungsflüssigkeit innerhalb eine Hauptvorlaufleitung (8D) detektiert und wobei genannte Durchflussreglungsmittel adaptiert sind um Bypassventil (9) zu öffnen wann einer der Benützer flussabwärts von genannte Hauptvorlaufleitung eine Frage meldet um Lieferung von heiszes Wärmeübertragungsflüssigkeit und die Temperatur von Wasser innerhalb genannte Leitung unten eine bestimmter Temperatur detektiert wird, und um solche Bypassventil zu schlieszen wann eine Temperatur oberhalb eine bestimmter Temperatur detektiert wird .

15. Eine Heizungsanlage nach einer oder mehrere Ansprüche 10 - 14, **dadurch gekennzeichnet** dasz genannte Kreislaufsystem Hauptlieferungskreisvorlaufleitung (1D) enthaltet.

16. Eine Heizungsanlage nach einer oder mehrere Ansprüche 10 - 15, **gekennzeichnet durch** Rücklaufleitungen die Mediumleitungen enthalten mit gröszere Innendiameter und geringere Wärmeisolierung als korrespondierende Vorlaufleidungen.

17. Eine Heizungsanlage nach einer oder mehrere Ansprüche 10 - 16, **dadurch gekennzeichnet** dasz Hauptleitungen und Hausanschluszleitungen vorgefertigte Verbindungen haben.

18. Eine Heizungsanlage nach Anspruch 17, **dadurch gekennzeichnet** dasz genannte vorgefertigte Verbindungen Hauptleitungen und Hausanschluszleitungen parallel verbinden.

19. Anlage nach einem der vorangehenden Ansprüche, **gekennzeichnet durch** dasz genannte Wärmespeicher (22) Wärmeübertragungsflüssigkeit enthaltet mit einem schichten Temperaturverteiling.

20. Anlage nach einem der vorangehenden Ansprüche, **gekennzeichnet durch** dasz genannte Benützer ein Durchflusssanitairwassererwärmer (23) enthalten.

21. Eine Heizungsanlage nach Anspruch 19 oder 20, **dadurch gekennzeichnet** dasz genannte Wärmespeicher (22) und genannte Durchflusssanitairwassererhitzer (23) ein gemeinsame Umfassung (24) von wärmeisolierendes Material haben.

22. Anlage nach einem der vorangehenden Ansprüche, **gekennzeichnet durch** dasz genannte Wärmespeicher (22) ein wasserenthaltend Volume zwischen 40 und 80 Liters haben.

23. Anlage nach einem der vorangehenden Ansprüche, **gekennzeichnet durch** dasz genannte Benützer Mittel enthalten um die Durchflusz während lieferung von heiszes Wärmeübertragungsflüssigkeit innerhalb ein bestimmte Bereich, und die weiter ein Wärmezähler enthaltet dasz ein akkumulative Wasserzähler (44) und Mittel (45) für registrieren von zeitintegrierte Differenz zwischen Vorlauf- und Rücklauf-temperatur, die detektiert wird **durch** Temperaturfühler (29) (46) während die Lieferungszeit.

24. Anlage nach einem der vorangehenden Ansprüche, **gekennzeichnet durch** dasz genannte Wärmequelle (2) zum mindestens einer Art von Wärmerzeugungsmittel enthaltet der selektiert wird von einer Gruppe der Wärmepumpen, Sonnenkollektoren, (Zwischengekühlte) Gasturbine Wärme-Kraft Anlagen, Gasmotor Wärme-Kraft Anlagen oder Heizstoff gefeuerte Kesselanlagen enthaltet.

## Revendications

1. Procédé de fournir de la chaleur au pluriel d'utilisateurs de chauffage (6), faire usage d'un système de chauffage comprenant du moins une source de chaleur (2) pour chauffer un fluide caloporteur, un système de circulation pour délivrer ce fluide caloporteur à chaque tel utilisateurs muni d'un récipient de stockage de chaleur (22) contenant du fluide caloporteur pour le stockage de chaleur, le système de circulation comprenant en outre conduits d'arrivé et de retour qui comprends conduits principaux de prévu (11D, 11R), conduits principaux branché (8D, 8R) et conduits de service (7D, 7R), le système de circulation comprenant en outre moyens de réglage qui comprends moyens de délivrer et de charger (30) pour délivrer du fluide caloporteur chaud et pour charger des récipients de stockage de chaleur et en outre comprends moyens de bipasse (26) pour permettre un débit de bipasse de fluide caloporteur de conduits d'arrivé à de retour sans passer un récipient de stockage de chaleur, **caractérisé par** régler ces moyens de bipasse ainsi qu'il y a de peu ou rien de débit de bipasse continu à l'aval de ces conduits principaux branché d'arrivé nommé (8D) pendant les temps que pas de fluide caloporteur est délivrer à quelqu'un des utilisateurs de chauffage raccorder à l'aval de tel conduits principaux branché d'arrivé nommé.

2. Procédé selon la revendication 1, duquel ces moyens de réglage le débit comprenant des moyens de régler la température de fluide caloporteur entre tel conduits principaux de prévu d'arrivée nommé (11D), **caractérisé par** régler ces moyens de réglage nommé ainsi que la température de fluide caloporteur entre tel conduits principaux de prévu d'arrivé nommé est maintenue plus haut qu'une température sélectionnée.

3. Procédé selon la revendication 2, duquel ces conduits principaux de prévu nommé comprenant du moins un conduit principal d'arrivé cercle de prévu (1D) et ces moyens de réglage nommé comprenant des moyens de pompe (3) pour circuler du fluide caloporteur à travers de ce conduit principal d'arrivé cercle de prévu nommé, **caractérisé par** régler ces moyens de pompe en ce qui la température de fluide caloporteur entre ce conduit principale d'arrivée cercle de prévu est maintenu plus haut qu'une température sélectionnée et entre une portée de la température sélectionnée.

4. Procédé selon la revendication 2 ou 3, duquel ces conduits principaux d'arrivé de prévu nommé comprennent du moins un conduit principal d'arrivé branché de prévu (11D) et ces moyens de réglage nommé comprends une vanne principale de bipasse (12) qui raccorde le conduit nommé avec le conduit principal de retour branché de prévu correspondent (11R), **caractérisé par** ajuster le débit à travers cette vanne de bipasse en ce qui la température de fluide caloporteur entre ce conduit principale d'arrivée branchée de prévu est maintenue plus haut qu'une température sélectionnée.

5. Procédé selon l'une quelconque des revendications précédentes, **caractérisé en ce que** ces moyens de réglage nommé sont ajustés pour obtenir des procédées de chargement comprenant des chargements synchroniques des récipients de stockage de chaleur d'un pluriel des utilisateurs de chauffage raccordant à l'aval d'un conduit principal branché d'arrivé nommé (5D).

6. Procédé selon l'une quelconque des revendications précédentes, duquel ces moyens de délivrer et de charger nommé comprenant des moyens (35) de signaler une demande à délivrer de fluide caloporteur chaud à chaque utilisateur de chauffage, **caractérisé en ce qu'**après une demande d'un tel utilisateur de chauffage pour délivrer de fluide caloporteur chaud, bipasse de fluide caloporteur avec une température plus bas q'une température minimum sélectionnée de délivrer à tel utilisateur de chauffage, jusqu'à la température de fluide caloporteur est égal ou plus haut que cette température minimum.

7. Procédé selon l'une quelconque des revendications précédentes, **caractérisé par** maximaliser le débit de bipasse, pendant bipasse de fluide caloporteur avec une température plus bas q'une température minimum sélectionnée, pour minimaliser l'espace de temps de bipasse.

8. Procédé selon la revendication 7, **caractérisé par** augmenter ce débit de bipasse nommé par ouvrir un nombre de vannes de bipasse individuel (26) chacun de ce qui raccordent un conduit de service d'arrivé (7D) avec un conduit de service de retour correspond (7R), d'un pluriel des utilisateurs de chauffage raccordent à l'aval d'un conduit principal branché d'arrivé nommé (5D), quand un de ces utilisateurs de chauffage nommé signale une demande à délivrer de fluide caloporteur.

9. Procédé selon la revendication 8, **caractérisé par** augmenter ce débit de bipasse nommé par ouvrir une vanne de bipasse principal (9) qui raccorde un conduit principal branché d'arrivé (8D) avec un conduit principal branché de retour correspondent (8R).

10. Un système de chauffage pour fournir de la chaleur à un pluriel d'utilisateurs de chauffage (6), comprenant du moins une source de chaleur (2) pour chauffer un fluide caloporteur, un système de circulation pour délivrer du fluide caloporteur à chaque tels utilisateurs muni d'un récipient de stockage de chaleur (22) contenant du fluide caloporteur pour le stockage de chaleur, le système de circulation comprenant en outre conduits d'arrivé et de retour qui comprennent conduits principaux de prévu (11D, 11R), conduits principaux branchés (8D, 8R) et conduits de service (7D, 7R), le système de circulation comprenant en outre des moyens de réglage qui comprennent moyens de délivrer et de charger (30) pour délivrer du fluide caloporteur chaud et pour charger des récipients de stockage de chaleur, tels moyens de délivrer et de charger comprenant des moyens (33) de signaler une demande à charger un récipient de stockage de chaleur, ces moyens de réglage comprenant des moyens de bipasse (26) pour permettre un débit de bipasse de fluide caloporteur de conduits d'arrivé à de retour sans passer un récipient de stockage de chaleur, **caractérisé par** ces moyens de réglage nommé qui sont ajusté pour obtenir un débit qui cause dans un intervalle de temps sélectionnés après une signale pour charger un récipient de stockage de chaleur d'un utilisateur de chauffage, délivrer du fluide caloporteur d'une température plus haut q'une température minimum sélectionnée à tel utilisateur de chauffage.

11. Un système de chauffage selon la revendication 10, **caractérisé en ce** qui ces moyens de réglage nommés comprenant du moins un régulateur de système électronique en communication avec un pluriel d'utilisateurs de chauffage.

12. Un système de chauffage selon la revendication 10, **caractérisé en ce** qui ces moyens de bipasse nommés comprenant des vannes de bipasse individuel (26) qui raccordent un conduit de service d'arrivé (7D) avec un conduit de service de retour correspondent (7R) et ces moyens de réglage nommés être ajusté pour réguler les vannes de bipasse individuel d'un pluriel d'utilisateurs de chauffage à l'aval d'un conduit principal branché d'arrivé nommé.

13. Un système de chauffage selon un ou plusieurs des revendications 10 - 12, **caractérisé en ce** qui les moyens de bipasse nommés comprenant du moins une vanne de bipasse principal (9) qui raccorde un conduit principal branché d'arrivé (8D) avec un conduit principal branché de retour correspondent (8R), ces moyens de réglage nommés être ajusté pour réguler la vanne de bipasse principal.

14. Un système de chauffage selon un ou plusieurs des revendications 10 - 13, **caractérisé en ce** qui ces moyens de réglage nommés comprenant un senseur de température (10) à détecter la température de fluide caloporteur entre un conduit principale d'arrivé (8D) et ces moyens de réglage nommés être ajusté pour ouvrir une vanne de bipasse (9) quand un des utilisateurs de chauffage à l'aval de ce conduit principal d'arrivé nommé signale une demande de fluide caloporteur chaud et la température d'eau contenant par ce conduit nommé sont détecté être plus bas q'une température sélectionnée, et pour fermé cette vanne de bipasse quand cette température est détectée être plus haut q'une température sélectionnée.

15. Un système de chauffage selon un ou plusieurs des revendications 10 - 14, **caractérisé par** ce système de circulation contenant un conduit principal d'arrivé cercle de prévu (1D).

16. Un système de chauffage selon un ou plusieurs des revendications 10 - 15, **caractérisé par** des conduits de retour contenant conduits à medium avec un diamètre intérieur et moins de l'isolant thermique que les conduits d'arrivé correspondent.

17. Un système de chauffage selon un ou plusieurs des revendications 10 - 16, **caractérisé par** conduits principaux et conduits de service contenant raccordements préfabriqués.

18. Un système de chauffage selon la revendication 10, **caractérisée en ce** qui raccordements préfabriqués contenant conduits principaux et conduits de service qui sont raccordé en parallèle.

19. Un système de chauffage selon un ou plusieurs des revendications précédentes, **caractérisé par** le récipient de stockage de chaleur nommé (22) contenant du fluide caloporteur avec une distribution de température stratifiée.

20. Un système de chauffage selon un ou plusieurs des revendications précédentes, **caractérisé par** ces utilisateurs de chauffage nommés comprenant un échangeur de chaleur d'écoulement (23).

21. Un système de chauffage selon les revendications 19 et 20, **caractérisé par** ce récipient de stockage de chaleur nommé (22) et cet échangeur de chaleur traversé (23) comprenant une enveloppe collective d'un matériel isolante thermique.

22. Un système de chauffage selon un ou plusieurs des revendications précédentes, **caractérisé par** ce récipient de stockage de chaleur stratifié nommé (22) comprenant un volume contenu d'eau entre 40 et 80 liter.

23. Un système de chauffage selon un ou plusieurs des revendications précédentes, **caractérisé par** ces utilisateurs de chauffage nommés comprenant moyens de maintenir entre une marge déterminée le débit pendant délivrer de fluide caloporteur chaud à tel utilisateur, et comprenant un compteur de chaleur qui comportant un compteur d'eau accumulative (44) et moyens (45) de calcul intégral de temps la différence entre la température d'arrivée et de retour, sondé par sondes de la température (29) (46), pendant le temps de délivrance.

24. Procédé selon l'une quelconque des revendications précédentes, **caractérisé par** cette source de chaleur nommée (2) comprenant au moins une façon de moyens de produire de chaleur qui est sélecté d'un groupe comprenant pompes à chaleur, panneaux solaire, turbine à gaz central thermique (avec refroidissement intermédiaire), moteur à gaz central thermique ou chaudières de chauffage à carburent.
